# EUROPEAN PATENT SPECIFICATION

(11) **EP 2 538 255 B1**
(45) Date of publication and mention of the grant of the patent: **10.08.2016**
(21) Application number: 11170621.4
(22) Date of filing: 20.06.2011
(51) Int. Cl.: G02B 6/44

(54) **Cable coupling device with overlength storage for jumper cables**
Kabelkopplungsvorrichtung mit Überlängenverstauung für Überbrückungskabel
Dispositif de couplage de câble doté d'un stockage surlongueur pour câbles de démarrage

(43) Date of publication of application: 26.12.2012
(73) Proprietor: Tyco Electronics Raychem BVBA, 3010 Kessel-Lo (BE)
(72) Inventor: Claessens, Bart Mattie, 3500 Hasselt (BE); Coeckelberghs, Diana, 3460 Bekkevoort (BE); Alaerts, Roger, 3200 Aarschot (BE); Verbinnen, Luc Brigitta Michel, 3001 Heverlee Leuven (BE)
(74) Representative: Obst, Bernhard

(56) References cited:
- WO-A1-2010/001148
- WO-A2-2009/120536
- US-A1- 2006 275 008

## Description

The present invention relates to a cable coupling device, a method, and a storage device. The invention relates in particular to a distribution system for optical fiber cables and a method to connect jumper cables in a distribution system as well as the storage of overlenghts of the jumper cables.

In a multiple dwelling unit (such as a building) which receives outside service provider optical fiber cables from a provider, it is necessary to couple these outside service provider optical fiber cables with riser optical fiber cables feeding individual dwelling units (such as apartments) within the multiple dwelling unit. Traditionally, such optical fiber coupling may be achieved by splicing an optical fiber from the outside service provider optical fiber cables either directly (or via a splitter) with an optical fiber serving an individual dwelling unit. Recently, rather than splicing the optical fibers together, optical fibers may be provided with optical fiber connector ends or optical fiber adapters to enable optical fiber connections between the optical fibers feeding dwelling units and the outside service providers to be made, broken or re-configured as appropriate.
As the number of outside service provider optical fibers increase (and given that these optical fibers may be split to enable the same outside service provider optical fiber to be coupled with more than one dwelling unit), the number of optical fiber connections to be managed increases dramatically.
Whilst various techniques exist for managing optical fiber connection complexity, they each have their own shortfalls, which can make it difficult for an operative to manage and maintain optical fiber connections or, in extreme circumstances, can lead to fatigue or even failure.

Therefore different cable distribution systems have been developed comprising a plurality of connector arranged next to each other in the face of one or several similar units. These units are sometimes called patch strips, patch trays, patch panels, interconnection modules or the like. Usually one set of connectors is permanently connected to a feeder cable of a provider whereas another set of connector is more or less permanently connected to one or more riser cables connecting multiple dwelling units such as apartments, offices, shops or the like. The actual connection between a dwelling unit and the provider is realized by a jumper cable connecting a connector of said one set with one connector of the other set of connectors. Jumper cables may also be called pigtails or patch cords and comprise ruggedized optical fibers, which are connected to the connector modules. One example of such a system is disclosed in WO2010/001148 A1.

Usually jumper cables of the same length are used. As the distances between connectors are different, jumper cables sometimes provide overlength that needs handling.

Other distribution systems are known from the US2004/011750A1 using different drawers to arrange the cables, some of which can be used for storing and interconnecting cables. Another optical fiber distribution system is disclosed in EP 0 880 721 A1. The distribution system comprises: a) at least one stack of optical fiber interconnection modules; and b) at least one optical fiber storage region located in at least one said stack of interconnection modules, which storage region, in use, stores spare lengths of one or more optical fibers which extend between respective interconnection modules, wherein in the assembled condition the or each storage region is located non movable in said stack of interconnection modules, and wherein the or each storage region comprises a plurality of supports which are mutually spaced-apart across at least part of the width of the stack of interconnection modules such that, in use, each spare length of optical fiber may be routed into the storage region and routed around at least one of the supports which may be selected to provide at least approximately the correct storage length required for that spare length of optical fiber.

WO 2009/120536 A2 describes a cable management panel including a chassis and a drawer. The chassis defining rear and side openings for cable entry and exit. The drawer having a front panel that may include angled adapters. The drawer having an open rear that accommodates cables entering from the rear openings of the chassis, and that accommodates the addition of a rear wall. The cable management panel being adaptable to provide a variety of cable routing configurations to accommodate a user's particular cable routing needs.

WO 2010/001148 A1 discloses an optical fibre coupling device and a methoed. The optical fibre coupling device comprises a first patch strip comprising a second plurality of optical fibre connectors arranged along a face of the second patch strip, the first and second patch strips being in a stacked arrangement where the second plurality of optical fibre connectors is offset from the first plurality of optical fibre connectors in a first and a second direction transverse to a stacking direction.

US2005/100301A1 describes system having cable management panels at the vertical side to take up overlength of any cable. Instead of the term overlength sometimes the terms slack, excess or spare are used.

There is thus a need for an optical fiber distribution system with a cable connection device in which overlength lengths of fiber are stored in an organized yet compact manner, and which provides quick and easy installation and access of such stored fiber in a manner, which reduces the risk of disturbance of other stored fibers. The purpose of the present invention is to provide such a system.

According to the invention a cable coupling device is provided as defined by claim 1.

According to a second aspect of the invention a method (as defined by claim 12) of connecting a jumper cable and storing overlength of the jumper cable is provided. The method comprises the steps: connecting one end of the jumper cable to one of a plurality of connectors arranged at a face of at least one patch strip, connecting the other end to another connector of the at least one patch strip or to one of a plurality of connectors arranged at a face of at least another patch strip, and entering the overlength intermediate of the ends of the jumper cable into an overlength storage tray being supported by a support structure together with the at least one patch strip and/or the other patch strip in a stacked arrangement, said overlength storage tray comprising a tray base and at least one cable guide protruding from said tray base, and placing a bight portion of the overlength of the jumper cable around said at least one cable guide to form a single open loop in the overlength storage tray that takes up approximately the complete overlength.

The invention has the advantage that it provides a simple, organized and compact system of storing overlengths of cables (which will normally be optical fibers, especially ruggedized fibers, e.g. pigtails, patch cords or jumpers) because the storage tray can be integrated in close proximity to the patch strips supported at the same support structure in a stacked manner. Cables can easily be added or removed from the storage region of the overlength storage tray as the cables are guided in one single open loop around that at least one cable guide. By attaching the at least one overlength storage tray and the at least one patch strip movably, preferably pivotal, in a stack one can service individual strips or trays by moving, for example pivoting, other strips or trays out of the way. In case several overlength storage trays are used the access of the lower tray is possible by moving,'for example pivoting, the upper tray

Preferably, the face of the patch strip is a face of a patch tray. Such a patch tray comprises components to connect one ore more feeder or a riser cables to the connectors. Thus, the tray can accommodate splices splitters and the like. Usually the connectors are arranged in a longitudinal direction along the face of the patch tray. In this way, flat trays can be realized. Further access to the connectors in the inside of the tray is easier, when all connectors are arranged along one line or in a staggered arrangement along one line.

To be able to store different lengths of overlength cable effectively in a preferred embodiment the overlength storage tray comprises a plurality of cable guides spaced along a line on the base of said overlength storage tray. This way the installer selects one of the cable guides suitable to provide for taking up the desired length of excess or overlength cable in the overlength storage tray. I.e. different paths the overlengths of the cables are guided along can be realized having different lengths depending on the cable guides chosen as "truning points" for the single open loops. Further, all cables are guided more or less in the same way entering end exiting the overlength storage tray parallel to each other. Only the lengths of the single open loops may be different for different cables stored.

In a preferred embodiment the overlength storage tray is provided with an entrance/exit face being oriented transverse to the base, wherein the entrance/exit face is in a stacked arrangement with the at least one patch strip face when the patch strip and the at least one overlength storage tray are in the stacked position. I.e. the connectors of the patch strip or patch trays are facing basically in the same general direction as the entrance and exit openings of the overlength storage tray. This allows for a very well arranged and clearly laid-out routing of the cables in the space in front of the stacked arrangement. It is possible to route all patch cables practically without any crossovers. The general direction all cables in front of the patch strips are following is parallel to the direction of stacking. In other words, if one associates the patch strip faces with a front face it is advantageous to enter the cables for overlength storage via the front face of the overlength storage tray as well rather than entering and/or exiting it via a side face or even the rear face.

In one preferred embodiment the overlength storage tray is pivotally connected with a support structure to enable said at least one overlength storage tray to be pivoted from said stacked position. Preferably the patch stripe or patch tray are connected in the same way to be able to be pivoted from the stacked position. This enables an installer to pivot the trays that are stacked above a tray, which needs to be serviced. Servicing can comprise for example cleaning, repair or maintenance work, or adding or removing of cables to the overlength storage tray.

In one embodiment the at least one patch tray and the at least one overlength storage tray are hinged at the support positions of the support structure detachable and pivotal. By being capable to detach a tray one is provided with the ability to add and/or remove patch strips or patch tray as well as overlength storage trays. One can reorganize and especially expand a distribution system easily by adding new trays. In some situations, it is advantageous to move several trays as a group up or down in the stacked arrangement and to insert trays in between, on the top or even on the bottom of the arrangement.
In the preferred embodiments, the overlength storage tray is usually positioned at the bottom of the stacked arrangement. In cases where new trays are added, it might be advantageous to move all existing trays up one support position and to add a new storage tray at the
bottom and a new patch tray at the top of the stacked arrangement. By moving up all existing tray the distances between the patch trays and the original storage tray remain the same so that there will be no need to adapt the overlength storage. Usually the remaining length of the jumper cables will be sufficient to move the tray one support position up or down relative to the other trays.

In certain situations, it is advantageous or desired to add another extra cable being provided that is not connected to any of the connectors and does not comprise a connection element to establish a connection directly in one of the connectors. In these situations, one splices a so-called pigtail to an end the extra cable. To take up the splice and extra cable length, if needed, the overlength storage tray comprises a separate splicing compartment additionally to the overlength storage area or storage compartment.

According to a preferred embodiment of the method another jumper cable is connected with one end to one of the connectors and with its other end is spliced to a feeder or riser cable end, wherein the splice connection and part of the other jumper cable as well as part of the feeder or riser cable are stored in a separate splice area of the overlength storage tray.

In a preferred embodiment a wall from the storage area separates the splicing compartment. This guarantees a better protection of the spliced cable or cables and ensures that none of the cable of which the overlength is stored in the overlength storage tray is accidentally guided around any of the routing elements needed in the splicing compartment. Cables being spliced at one end are kept separate of the other normal jumper cables designed to be connected with both ends to the connectors in the patch strips.

Usually said support structure as well as the different types of trays is mounted in a box. A box can be any enclosure, housing or the like used to protect installations. Such a box may for example be called a distribution box.

In many situations it is desired to keep the patch strips or patch trays having connectors connected to a feeder cable or feeder cables of a provider separated from the patch strips and patch trays associated with connectors connected to one or more riser cables. Thus in one preferred embodiment another box is arranged next to the box, the other box comprising at least another patch strip comprising a plurality of connectors arranged along a face of said another patch strip; and
another support structure for having a plurality of support positions for supporting several of the at least another patch strip in a stacked arrangement, wherein the box comprises a port and the other box comprises another port, each of the ports designed for feeding jumper cable out of the box and into the another box or vice versa.
It should be noted that it is only necessary to have an overlength storage tray in one of the boxes as each jumper cable comprises one part that is positioned in the box the overlength storage tray is provided in.
In a preferred embodiment the box and the another box are arranged next to each other such that the port and the other port are in connection to provide a feed through channel sealed off against an environment by sealing means. The sealing means can be a tube or a hose. The sealing means can also be one or two O-rings, for example made of foam that are in contact with each other and/or the wall surrounding the port or ports. The boxes may have several ports in different locations, which might be closed initially and can be broken open.

According to a preferred embodiment of the method the support structure is arranged in box and another box is arranged next to the box, the another box comprising said at least another patch strip; and
another support structure having a plurality of support positions for supporting several of the at least another patch strip in a stacked arrangement, wherein the box comprises a port and the other box comprises another port, and wherein the port and the other port are in connection to provide a feed through channel seal off against an environment by a sealing means, wherein the method comprises the step of feeding the end or the other end of the jumper cable through the feed trough channel.

The present invention will be explained further below with reference to the accompanying drawings, in which:
- Figure 1: shows, in perspective, a cable distribution system comprising a cable connection device;
- Figure 2: shows, in perspective, a support structure having patch trays attached only;
- Figure 3: shows, in perspective, an overlength storage tray
- Figure 4: shows, in perspective, a one support structure of a cable connection device and a plurality of jumper cables, of which always one end is connected to a connector in a patch tray supported by said one support structure;
- Figure 5: shows, in perspective, a cable connection device comprising two different support structures positioned in different boxes and a plurality of cables establishing connections between connectors in patch trays supported by the different support structures.

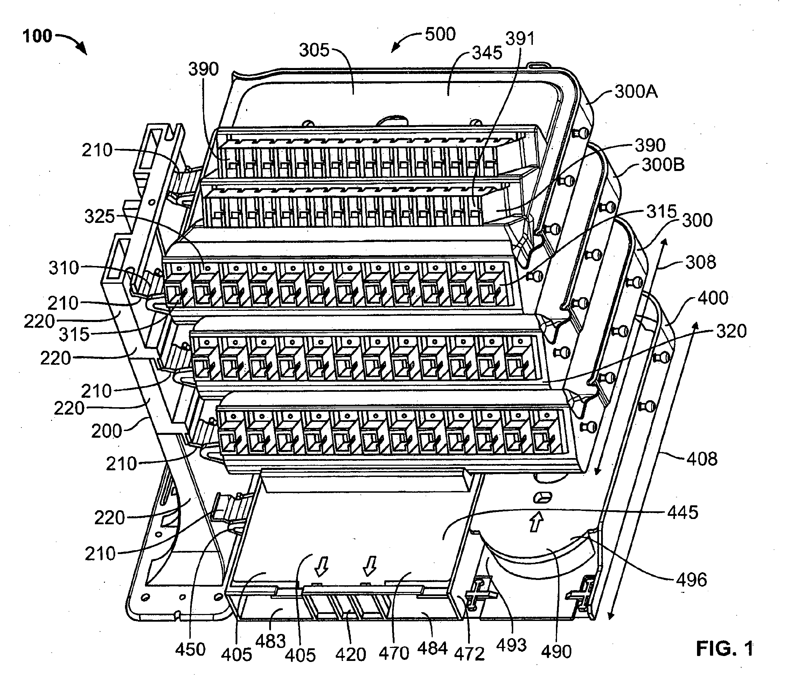

Figure 1 shows a cable connection device 100. Such a cable connection device is also called distribution system. The cable connection device 100 comprises a support Structure 200. The support structure 200 comprises several support positions 220 to support patch trays 300 and at least one overlength storage tray 400 in a stacked manner. The patch trays 300 and the overlength storage tray 400 are attached to the support structure 200 detachable and movably.

The patch trays 300 and the overlength storage tray 400 are hinged at support elements 210. The patch trays 300 and the overlength storage tray 400 can be pivoted to allow access to the top face 345, 445 of trays 300, 400 below, as will be explained in more detail below.

The patch trays 300 comprise a patch strip 310 each. The patch strip 310 comprises a plurality of connectors 315 arranged along a patch strip face 325. The patch strip face 325 is also a front face 320 of the respective patch tray 300. The connectors 315 are connected on the inside of the patch trays 300 to a feeder cable of a provider and/or a riser cable feeding for example multiple dwelling units. The patch trays 300 may accommodate splices, slitters and the like. A lid 305 to protect the installations inside covers the patch trays 300.

The connectors 315 are configured to mate with adapters or other connector elements to establish a mechanical connection as well as an optical connection. Unless otherwise stated it is assumed that jumper cables are provided with such an adapter at each end to mate with one of the connectors 315.

To ease access to individual connectors the support structure 200 is configured in this embodiment to offset the adjacently stacked identical patch trays 300 not only in the direction of stacking but also in the two directions perpendicular hereto.
In Fig. 1 the patch tray 300A stacked above patch tray 300B is offset to the left and to the rear.

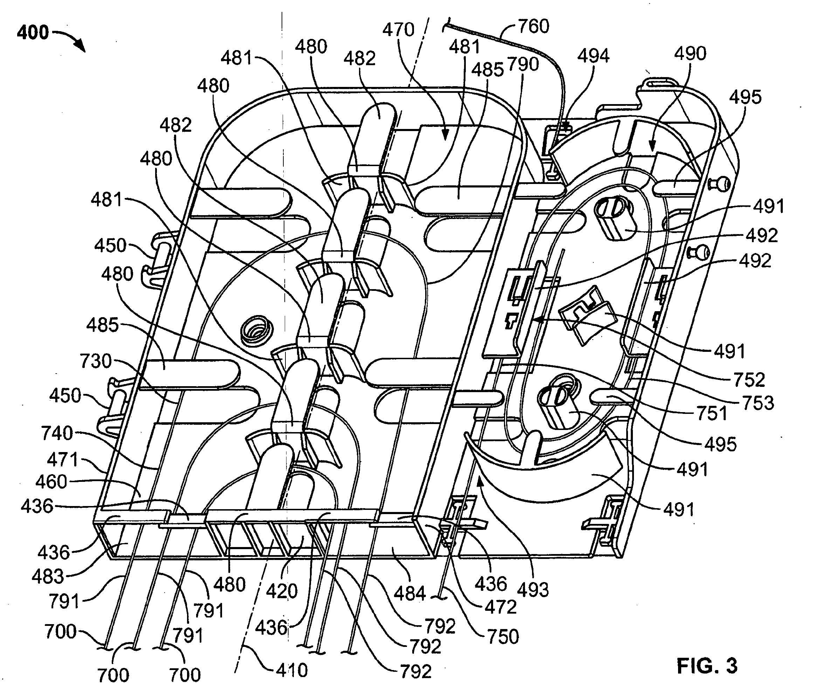

The hinged support is realized at the left side faces 330, 430 of the patch trays 300 and the overlength storage tray 400 oriented transverse, preferably perpendicular to the front face 320,420 of the respective trays 300, 400. In Fig. 1 the patch trays 300 and the overlength storage tray 400 are shown in the so-called stacked position in the stacked arrangement 500. This position may also be called the normal position, taken during normal use, or rest position. From this position the trays 300, 400 can be pivoted each in a counter clockwise direction, to allow access to the tray 300, 400 below. Such a situation is shown in Fig. 3. The position shown there may be called pivoted position or service position of the stacked arrangement 500..

To be able to take up relative long over lengths the overlength storage tray 400 needs to have a certain length 408 perpendicular to the front face 320, where the end of the intermediate overlength portion are entering and exiting. In some embodiment, like the one shown in Fig. 1, the overlength storage tray 400 has a length 408 larger than the length 308 of the patch trays 300.

In other embodiments these lengths 308, 408 may be the same or similar. The size of the stacked arrangement 500 influences the maximum length a jumper cable has to have. Thus the size of the stack arrangement influences also the length of the intermediate overlength portions of the jumper cables occurring.

It is preferred to keep connectors 315 associated with a feeder cable of a provider physically separated from connectors 315 associated with dwelling units like apartments etc. This can be archived by using different patch trays 300. For example, one for connectors associated with the provider and one associated with the dwelling units. Jumper cables are then connected with each end to a different patch tray 300. Possibly existing overlength portions are then stored in the overlength storage tray 400.

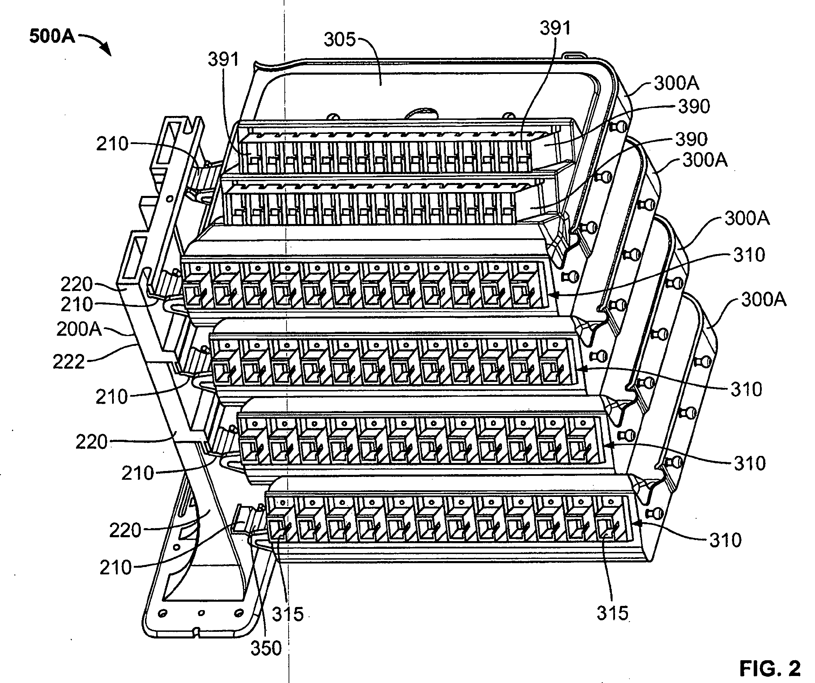

Especially in larger distribution installations it is desired to have separate support structures each carrying a certain number of patch trays. Thus the cable connection device 100 shown in Fig. 1 may be expanded by another support structure 200A like the one shown in Fig. 2. This support structure 200A supports several patch trays 300. The stacked arrangement 500A in Fig. 2 differs from the arrangement 500 shown in Fig. 1 as it does not comprise an overlength storage tray. As both arrangements 500, 500A are used in conjunction in that each jumper cable is connected with both arrangements 500, 500A at the same time. Therefore, the overlengths existing can all be taken up in an overlength storage tray 400 of one of the arrangements.

Fig. 3 shows an open overlength storage tray 400 in detail. The overlength storage tray 400 comprises an overlength storage compartment 470 (also called storage area) and a splice compartment 490 (also called splice area). In the overlength storage compartment 470 several cable guides 480 protrude form a base 460 of the storage tray. The cable guides 480 are arranged preferably uniformly spaced along a line 410 oriented transverse, preferably perpendicular to the front face 420 of the overlength storage tray 400.

The cable guides 480 comprise a curved surface 481 protruding from the base 460. The curved surface 481 is facing away from the front face 420 of the overlength storage tray 400. At the top of each curved surface 481, there exists a retention plate 482 pointing away from the front face of the overlength storage tray 400. The surfaces of the retention plates 482 are oriented parallel to the base 460.

To store an overlength 740 intermediate the ends of a jumper cable 700 a bight is placed around one of the cable guides 480. The placing is carried out such that the intermediate portion 730 forms a single open loop 790. The loop ends are guides such that they enter/exit the overlength storage tray 400 via the front face 420. The front face 420 is also called exit/entrance face.

The overlength storage tray 400 comprises two openings 483, 484 in the front face 420. One opening 483 (left opening) is positioned on the left hand side with regard to the line 410 along which the cable guides are arranged. The other opening 484 is positioned on the right hand side of the line in the front face 420. The cables are preferably routed in such a fashion, that all loop ends 791 associated with jumper cable ends that are connected at a patch tray supported by a different support structure than the overlength storage tray itself, enter or exit preferably the proximal opening 483 (left hand side opening). The proximal opening 483 is the opening closer to the support elements 450 with which the overlength storage tray is movably connected to the support structure. In consequence, all loop ends 792 of jumper cables 700 that are associated with jumper cable ends connected to a patch tray supported by the same support structure as the overlength storage tray 400 itself enters/exits preferably the right hand opening also called distal opening 484.

The openings 483, 484 are each limited at the top of the front face 420 by two overlapping resilient strips 436. These stripes 436 can easily be bent apart to enter or remove a cable 700.

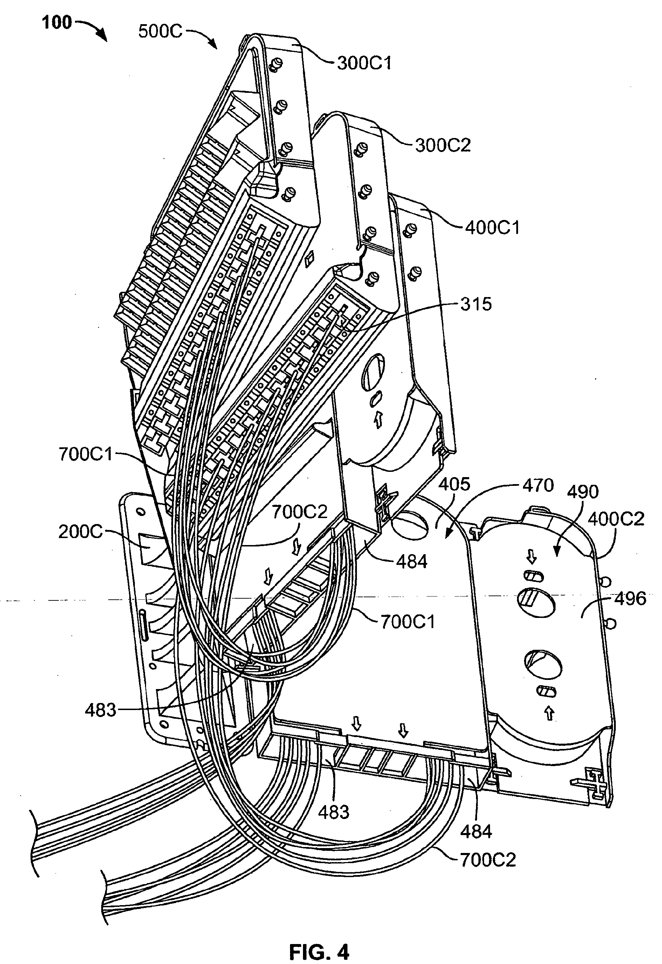

The retention plates 482 at the top of the cable guides 480 as well as retention plates 485 positioned at the top of walls surrounding the storage compartment 470 serve to support a storage area lid 405 (refer to Fig. 1 and 4). This storage area lid 405 is placed onto the retention plates 482, 485 to cover the storage area during normal operation. For adding and removing intermediate overlength portions 730 of jumper cables 700, the storage area lid is removed.

Next to the storage compartment 470, the overlength storage tray 400 comprises a splice compartment 490. There are cases where for example another new single feeder cable is supposed to be connected to some dwelling unit. In situations were there are no spare connectors 315 in the patch trays 300 (refer to Fig. 1) it will be advantageous to splice this another new fiber 760 of a provider directly to another jumper cable 750 that in turn can be connected to any connector with one of its ends. The other end 751 of this another jumper cable 750 is spliced directly to this another added new fiber 760. The splice 752 and the extra length 753 especially of the new added fiber 760 from the provider are stored in the splice compartment 490 of the overlength storage tray 400. This is positioned adjacent to the distal sidewall 472 (right sidewall) of the overlength storage compartment 470.

The proximal sidewall 471 (left sidewall) is provided with the hinge elements 450 used for pivotal and detachable connection to the support structure. The distal wall 472 serves as a physical separation of the storage compartment 470 and the splice compartment90. This physical separation ensures a clear and well organized routing. The splice compartment 490 comprises cable guiding elements 491 and protection and support elements 492 to take up and protect a splice 752. The splice compartment 490 comprises a rear opening 494 and a front opening 493. The rear opening 494 serves an entrance/exit for the additional feeder cable 760. The front opening is used for entering of the another jumper cable 750 spliced to the extra feeding cable 760. The splice area or splice compartment 490 is usually covered by a splice compartment lid 496 during normal operation (confer Fig. 1 and 4). This rest on retention plates 495 as well.

Fig. 4 shows a support structure 200C supporting two patch trays 300C1, 300C2 and two overlength storage trays 400C1 and 400C2. The installation shown is used as one patch field in connection with another patch field having a configuration like the one shown in Fig. 2. I.e. one end of each jumper cable is connected to a connector not shown in Fig. 4.
In this embodiment the two patch trays 300C1, 300C2 as well as the upper overlength storage tray 400C1 are pivoted in a counter clockwise direction into a service position. Only the lower overlength storage tray 400C2 is in its rest position.

In this embodiment shown in Fig. 4 the jumper cables 700C1 connected to the upper patch tray 300C1 have their overlength stored in the upper overlength storage tray 400C1. The jumper cables 700C2 connected to patch tray 300C2 have their overlengths stored in the lower overlength storage tray 400C2. This enables an even better organization of the jumper cables 700C1, 700C2 in a cable connection device.

Preferably, the cables end of the intermediate overlength portion 730 that is associated with the jumper cable end that is connected in patch tray supported by a different support structure enters/exits the proximal opening 483 that is proximal to the support structure. Consequently the cable ends of the intermediate overlength 740 connected to a patch tray 300C1, 300C2 supported by the same support structure 200C as the overlength storage tray 400C1, 400C2 enter/exit the distal openings 484 distal from the support structure 200C.

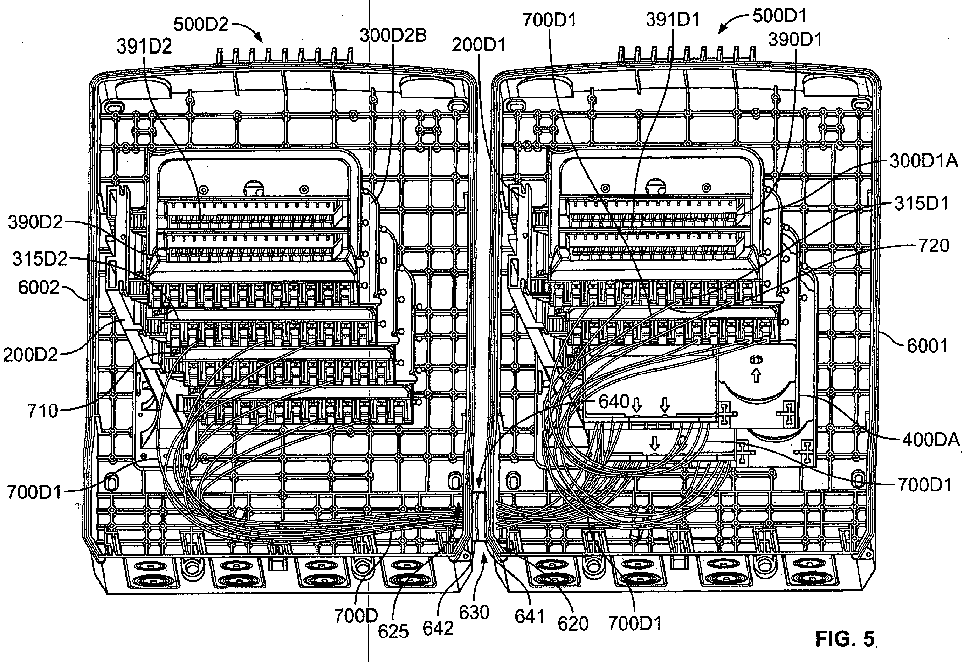

Fig. 5 shows a cable device comprising two support structures 200D1, 200D2 positioned in different boxes 6001, 6002. The right box 6001 is also referred to as the box. The right box 6001 is for example associated with a provider patch field. I.e. the connectors of the patch tray are connected to one or more feeder cables provided by a service provider. The feeder cable is not shown not to obscure the invention. The left box 6002 (also referred to as the another box) on the other hand is associated with a dwellings patch field. The connectors 315D2 of the dwelling patch field are connected to one or more riser cables feeding for example different dwelling units. Not to obscure the invention the riser cable or cables are not shown.

The actual connection between the service provider and one of the dwelling units is realized, broken or removed by adding, reorganizing, or removing the jumper cables 700D.

To be able to feed the jumper cables from the left box 6002 to the right box 6001 and vice versa the boxes 6001, 6002 comprise ports 620, 625. The ports 620, 625 are in connection to provide a feed through channel 630 sealed off against an environment by a sealing means 640. The sealing means 640 are for example O-rings 641 642. Other sealing means 640 like tubes, hoses or the like can also be used. It is also possible in other embodiments not to have a feed through channel but rather two separate feed through devices, one in each box.

An example how the jumper cables 700D are routed will be explained for one jumper cable 700D1. One end 710 is connected to a connector 315D2. The connector 315D2 belongs to the dwelling patch field. It is positioned in the patch tray 300D2B supported at the second highest support position of the support structure 200D2. From the connector 315D2 the jumper cable is routed through feed through channel 630 established by the ports 620, 625 and the O- rings 642, 641. Now the jumper cable 700D1 enters the upper overlength storage tray 400DA at the proximal opening 483 proximal to support structure 200D1. In the overlength storage tray 400DA the intermediate overlength of the jumper cable 700D1 is stored in a single open loop around one of the cable guides inside the cable storage compartment. For an example of such a loop, refer to the routing shown in Fig. 4. Thus the jumper cable 700D1 leaves the overlength storage tray 400DA through the distal opening 484 distal of the hinged movable support at the support structure 200D1. From there the jumper cable 700D1 is routed to a connector 315D1 in the upper tray 300D1A.

In order to break the connection one can remove the jumper cable 700D1 again or just place the end 710 in a connector 391 D2 of a park strip 390D2. The connectors 391 are not connected to any fiber on the rear.

Further or alternatively the other end 720 of the jumper cable 700D1 could be connected to a connector 391D1 of a park strip 390D1 in the right box 6001.

It should be understood that other organizations can realized without departing from the claims. It should be understood that other organizations can realized without departing from the claims. Further cable connection devices can have different numbers of patch tray and/or overlength storage trays. These can be arranged in different order in the stack formed. At least one stacked arrangement comprises at least one patch tray as well as one overlength storage tray at the same time.

### Parts list

- 100: cable connection device
- 200, 200A, 200C, 200D1, 200D2: support structure
- 210: support element
- 220: support positions
- 300, 300A, 300B, 300C1, 300C2, 300D1A, 300D2B: patch tray
- 305: patch tray lid
- 308: length
- 310: patch strip
- 315, 315D1, 315D2: connectors
- 320: front face
- 325: patch strip face
- 330: left face
- 345: top face
- 350: hinge element
- 390, 390D1, 390D2: park strip
- 391, 391D1, 391 D2: park connector
- 400, 400C1, 400C2, 400DA, 400DB: overlength storage tray
- 405: lid
- 408: length
- 410: line
- 420: front face (also called exit/entrance face)
- 436: overlapping resilient strips
- 440: side face
- 445: top face
- 450: hinge elements
- 460: base
- 470: overlength storage compartment
- 471: proximal wall (left wall)
- 472: distal wall (right wall)
- 473: right wall
- 480: cable guides
- 481: curved surface
- 482: retention plate
- 483: proximal opening (left opening)
- 484: distal opening (right opening)
- 485: retention plate
- 490: slice compartment
- 491: guide elements
- 492: protection an support elements
- 493: front opening
- 494: rear opening
- 495: retention plates
- 496: lid of splice compartment
- 500, 500A, 500C, 500D1, 500D2: stacked arragement
- 6001: box (right box)
- 6002: another box (left box)
- 620: port
- 625: another port
- 630: feed through channel
- 640: sealing means
- 641,642: O-rings
- 700, 700C1, 700C2, 700D, 700D1: jumper cables
- 710: one end
- 720: other end
- 730: intermediate portion
- 750: another jumper cable
- 751: other end
- 752: splice
- 753: extra length
- 760: feeder/riser cable
- 790: single open loop
- 791: loop end
- 792: loop end

## Claims

1. Cable coupling device (100) to connect jumper cables in a distribution system, comprising:
at least one patch strip (310) comprising a plurality of connectors (315) arranged along a face of said patch strip (310); and
a support structure (200, 200A, 200C,200D1,200D2) for having a plurality of support positions (220) for supporting several of the at least one patch strip (310) in a stacked arrangement (500, 500A, 500C, 500D1, 500D2),
**characterized by**
at least one overlength storage tray (400, 400C1, 400C2, 400DA, 400DB) for the storage of overlengths of the jumper cables, said overlength storage tray (400, 400C1, 400C2, 400DA, 400DB) comprising a tray base (460) and at least one cable guide (480) protruding from said tray base (460),
wherein said overlength storage tray comprises connection means (450) for attaching the overlength storage tray at one of the support positions (220),
the overlength storage tray (400) comprises two openings (483, 484) in an exit/entrance face (420), the connectors (315) of the patch strip (310) or patch trays are facing basically in the same general direction as the entrance and exit openings (483, 484) of the overlength storage tray (400);
wherein the at least one patch (310) strip and the at least one overlength storage tray (400, 400C1, 400C2, 400DA, 400DB) are positioned movably at different support positions (220) at the support structure (200, 200A, 200C, 200D1, 200D2) in a stacked arrangement (500, 500A, 500C, 500D1, 500D2).

2. Cable coupling device (100) of claim 1, **characterized in that** the face (325) of the patch strip (310) is a face (320) of a patch tray (300, 300A, 300B, 300C1, 300C2, 300D1A, 300D2B).

3. Cable coupling device (100) of claims 1 or 2, **characterized in that** the overlength storage tray (400, 400C1, 400C2, 400DA, 400DB) comprises a plurality of guides (480) spaced along a line (410) on the base (460) of said overlength storage tray (400, 400C1, 400C2, 400DA, 400DB).

4. Cable coupling device (100) of claims 1 to 3, **characterized in that** the overlength storage tray (400, 400C1, 400C2, 400DA, 400DB) comprises a separate splicing compartment (490) additionally to an overlength storage compartment (470).

5. Cable coupling device (100) of claims 1 to 4, **characterized in that** the splicing compartment (490) is separated by a wall (472) from the storage compartment (470).

6. Cable coupling device (100) of claims 1 to 5, **characterized in that** the at least one patch tray (300, 300A, 300B, 300C1, 300C2, 300D1A, 300D2B) and the at least one overlength storage tray (400, 400C1, 400C2, 400DA, 400DB) are hinged at the support positions (220) of the support structure (200, 200A, 200C, 200D1, 200D2) detachable.

7. Cable coupling device (100) of claims 1 to 6, **characterized in that** the overlength storage tray (400, 400C1, 400C2, 400DA, 400DB) in pivotally supported at the support structure (200).

8. Cable coupling device (100) of claims 1 to 7, **characterized in that** said overlength storage tray (400, 400C1, 400C2, 400DA, 400DB) comprises an entrance/exit face (420) being oriented transverse to the base (460), wherein the entrance/exit face (420) is in a stacked arrangement (500, 500A, 500C, 500D1, 500D2) with the at least one patch strip face (325) when the patch strip (310) and the at least one overlength storage tray (400, 400C1, 400C2, 400DA, 400DB) are in the stacked position.

9. Cable coupling device (100) of claims 1 to 8, **characterized in that** said support structure (200D1, 200D2) is mounted in a box (6001, 6002).

10. Cable coupling device (100) of claim 9, **characterized in that** another distribution box (6002) is arranged next to the box (6001), the other box (6002) comprising at least another patch strip (310) comprising a plurality of connectors (315) arranged along a face of said another patch strip (310); and
a support structure (200D2) for having a plurality of support positions (220) for supporting several of the at least another patch strip (310) in a stacked arrangement (500, 500A, 500C, 500D1, 500D2), wherein the box (6001) comprises a port (620) and the other box 6002) comprises another port (625), each of the ports (620, 625) designed for feeding a jumper cable out of the box (6001) and into the another box (6002) or vice versa.

11. Cable coupling device (100) of claim 10, **characterized in that** the box (6001) and the another box (6002) are arranged next to each such other such that the port (620) and the other port (625) are in connection to provide a feed through channel (630) sealed off against an environment by a sealing means (640).

12. Method of connecting a jumper cable (700, 700C1 700C2, 700D, 700D1) and storing overlength (740) of the jumper cable (700, 700C1 700C2, 700D, 700D1) by a cable coupling device according to any of claims 1-11 comprising the steps:
connecting one end (710) of the jumper cable (700, 700C1 700C2, 700D, 700D1) to one of a plurality of connectors (315D1) arranged at a face (325) of at least one patch strip (310), connecting the other end (720) to another connector (315D2) of the at least one patch strip (310) or to one of a plurality of connectors (315) arranged at a face (325) of at least another patch strip (310), and entering the overlength (740) intermediate of the ends (710, 720) of the jumper cable (700, 700C1 700C2, 700D, 700D1) into an overlength storage tray (400,400DA) being supported by a support structure (200) together with the at least one patch strip (310) and/or the other patch strip (310) in a stacked arrangement (500, 500A, 500C, 500D1, 500D2), said overlength storage tray (400, 400DA) comprising a tray base (460) and at least one cable guide (480) protruding from said tray base (460), and placing a bight portion of the overlength (740) of the jumper cable (700, 700C1 700C2, 700D, 700D1) around said at least one cable guide (480) to form a single open loop (790) in the overlength storage tray (400, 400DA) that takes up approximately the complete overlength

13. Method of claims 12, **characterized in that** another jumper cable (750) is connected with one end to one of the connectors (315) and the other end (751) is spliced to a feeder or riser cable end, wherein the splice connection and part of the other cable as well as part of the feeder or riser cable (760) are stored in a separate splice compartment (490) of the overlength storage tray (400, 400C1, 400C2, 400DA, 400DB).

14. Method of claim 12 or 13, **characterized in that** the support structure (200D1) is arranged in box (6001) and another box (6002) is arranged next to the box (6001), the other box (6002) comprising said at least another patch strip (310); and v another support structure (200D2) for having a plurality of support positions (220) for supporting several of the at least another patch strip (310) in a stacked arrangement (500, 500A, 500C, 500D1, 500D2), wherein the box (6001) comprises a port (620) and the other box (6002) comprises another port (625), and wherein the port (620) and the other port (625) are in connection to provide a feed through channel (630) sealed off against an environment by a sealing means (640), wherein the method comprises the step of feeding the end (710) or the other end (720) of the jumper cable (700D1) through the feed trough channel (630).

## Patentansprüche

1. Kabelkopplungsvorrichtung (100) zum Verbinden von Überbrückungskabeln in einem Verteilungssystem, aufweisend:
mindestens einen Steckstreifen (310), der mehrere Verbinder (315) aufweist, die entlang einer Seitenfläche des Steckstreifens (310) angeordnet sind; und
eine Stützstruktur (200, 200A, 200C, 200D1, 200D2) zum Aufweisen von mehreren Stützpositionen (220) zum Stützen von mehreren des mindestens einen Steckstreifens (310) in einer gestapelten Anordnung (500, 500A, 500C, 500D1, 500D2),
**gekennzeichnet durch**
mindestens eine Überlängenverstauungsschale (400, 400C1, 400C2, 400DA, 400DB) zum Verstauen von Überlängen der Überbrückungskabel, wobei die Überlängenverstauungsschale (400, 400C1, 400C2, 400DA, 400DB) eine Schalenbasis (460) und mindestens eine Kabelführung (480) aufweist, die von der Schalenbasis (460) vorsteht,
wobei die Überlängenverstauungsschale Verbindungsmittel (450) zum Anbringen der Überlängenverstauungsschale an einer der Stützpositionen (220) aufweist,
wobei die Überlängenverstauungsschale (400) zwei Öffnungen (483, 484) in einer Eintritts-/Austrittsseitenfläche (420) aufweist, wobei die Verbinder (315) des Steckstreifens (310) oder der Steckstreifen im Grunde in dieselbe allgemeine Richtung wie die Eintritts- und Austrittsöffnungen (483, 484) der Überlängenverstauungsschale (400) gerichtet sind;
wobei der mindestens eine Steckstreifen (310) und die mindestens eine Überlängenverstauungsschale (400, 400C1, 400C2, 400DA, 400DB) beweglich an verschiedenen Stützpositionen (220) der Stützstruktur (200, 200A, 200C, 200D1, 200D2) in einer gestapelten Anordnung (500, 500A, 500C, 500D1, 500D2) angeordnet sind.

2. Kabelkopplungsvorrichtung (100) nach Anspruch 1, **dadurch gekennzeichnet, dass** die Seitenfläche (325) des Steckstreifens (310) eine Seitenfläche (320) einer Steckschale (300, 300A, 300B, 300C1, 300C2, 300D1A, 300D2B) ist.

3. Kabelkopplungsvorrichtung (100) nach einem der Ansprüche 1 oder 2, **dadurch gekennzeichnet, dass** die Überlängenverstauungsschale (400, 400C1, 400C2, 400DA, 400DB) mehrere Führungen (480) aufweist, die entlang einer Linie (410) auf der Basis (460) der Überlängenverstauungsschale (400, 400C1, 400C2, 400DA, 400DB) beabstandet sind.

4. Kabelkopplungsvorrichtung (100) nach einem der Ansprüche 1 bis 3, **dadurch gekennzeichnet, dass** die Überlängenverstauungsschale (400, 400C1, 400C2, 400DA, 400DB) ein separates Spleißabteil (490) zusätzlich zu einem Überlängenverstauungsabteil (470) aufweist.

5. Kabelkopplungsvorrichtung (100) nach einem der Ansprüche 1 bis 4, **dadurch gekennzeichnet, dass** das Spleißabteil (490) durch eine Wand (472) vom Verstauungsabteil (470) getrennt ist.

6. Kabelkopplungsvorrichtung (100) nach einem der Ansprüche 1 bis 5, **dadurch gekennzeichnet, dass** die mindestens eine Steckschale (300, 300A, 300B, 300C1, 300C2, 300D1A, 300D2B) und die mindestens eine Überlängenverstauungsschale (400, 400C1, 400C2, 400DA, 400DB) abnehmbar an den Stützpositionen (220) der Stützstruktur (200, 200A, 200C, 200D1, 200D2) angelenkt sind.

7. Kabelkopplungsvorrichtung (100) nach einem der Ansprüche 1 bis 6, **dadurch gekennzeichnet, dass** die Überlängenverstauungsschale (400, 400C1, 400C2, 400DA, 400DB) schwenkbar an der Stützstruktur (200) gestützt ist.

8. Kabelkopplungsvorrichtung (100) nach einem der Ansprüche 1 bis 7, **dadurch gekennzeichnet, dass** die Überlängenverstauungsschale (400, 400C1, 400C2, 400DA, 400DB) eine Eintritts-/Austrittsseitenfläche (420) aufweist, die schräg zur Basis (460) ausgerichtet ist, wobei die Eintritts-/Austrittsseitenfläche (420) in einer gestapelten Anordnung (500, 500A, 500C, 500D1, 500D2) mit der mindestens einen Steckstreifenseitenfläche (325) ist, wenn der Steckstreifen (310) und die mindestens eine Überlängenverstauungsschale (400, 400C1, 400C2, 400DA, 400DB) in der gestapelten Position sind.

9. Kabelkopplungsvorrichtung (100) nach einem der Ansprüche 1 bis 8, **dadurch gekennzeichnet, dass** die Stützstruktur (200D1, 200D2) in einem Kasten (6001, 6002) angebracht ist.

10. Kabelkopplungsvorrichtung (100) nach Anspruch 9, **dadurch gekennzeichnet, dass** ein weiterer Verteilungskasten (6002) neben dem Kasten (6001) angeordnet ist, wobei der weitere Kasten (6002) mindestens einen weiteren Steckstreifen (310), der mehrere Verbinder (315) aufweist, die entlang einer Seitenfläche des weiteren Steckstreifens (310) angeordnet sind, aufweist; und
eine Stützstruktur (200D2) zum Aufweisen von mehreren Stützpositionen (220) zum Stützen von mehreren des mindestens einen weiteren Steckstreifens (310) in einer gestapelten Anordnung (500, 500A, 500C, 500D1, 500D2) aufweist, wobei der Kasten (6001) eine Durchlassöffnung (620) aufweist und der andere Kasten (6002) eine weitere Durchlassöffnung (625) aufweist, wobei jede der Durchlassöffnungen (620, 625) zum Zuführen eines Überbrückungskabels aus dem Kasten (6001) und in den anderen Kasten (6002) oder umgekehrt gestaltet ist.

11. Kabelkopplungsvorrichtung (100) nach Anspruch 10, **dadurch gekennzeichnet, dass** der Kasten (6001) und der weitere Kasten (6002) derart nebeneinander angeordnet sind, dass die Durchlassöffnung (620) und die weitere Durchlassöffnung (625) zum Vorsehen eines Durchführkanals (630) in Verbindung stehen, der durch ein Dichtungsmittel (640) zu einer Umgebung abgedichtet ist.

12. Verfahren zum Verbinden eines Überbrückungskabels (700, 700C1, 700C2, 700D, 700D1) und zum Verstauen einer Überlänge (740) des Überbrückungskabels (700, 700C1, 700C2, 700D, 700D1) durch eine Kabelkopplungsvorrichtung nach einem der Ansprüche 1 bis 11, folgende Schritte aufweisend:
Verbinden von einem Ende (710) des Überbrückungskabels (700, 700C1, 700C2, 700D, 700D1) mit einem von mehreren Verbindern (315D1), die an einer Seitenfläche (325) von mindestens einem Steckstreifen (310) angeordnet sind, Verbinden des anderen Endes (720) mit einem anderen Verbinder (315D2) des mindestens einen Steckstreifens (310) oder mit einem von mehreren Verbindern (315), die an einer Seitenfläche (325) von mindestens einem anderen Steckstreifen (310) angeordnet sind, und Einführen der Überlänge (740) zwischen den Enden (710, 720) des Überbrückungskabels (700, 700C1, 700C2, 700D, 700D1) in eine Überlängenverstauungsschale (400, 400DA), die durch eine Stützstruktur (200) zusammen mit dem mindestens einen Steckstreifen (310) und/oder dem anderen Steckstreifen (310) in einer gestapelten Anordnung (500, 500A, 500C, 500D1, 500D2) gestützt ist, wobei die Überlängenverstauungsschale (400, 400DA) eine Schalenbasis (460) und mindestens eine Kabelführung (480) aufweist, die von der Schalenbasis (460) vorsteht, und Anordnen eines Biegungsabschnitts der Überlänge (740) des Überbrückungskabels (700, 700C1, 700C2, 700D, 700D1) um die mindestens eine Kabelführung (480) zum Ausbilden einer einzelnen offenen Schleife (790) in der Überlängenverstauungsschale (400, 400DA), die ungefähr die vollständige Überlänge aufnimmt.

13. Verfahren nach Anspruch 12, **dadurch gekennzeichnet, dass** ein weiteres Überbrückungskabel (750) mit einem Ende mit einem der Verbinder (315) verbunden wird und das andere Ende (751) mit einem Zufuhr- oder Steigkabelende verspleißt wird, wobei die Spleißverbindung und ein Teil des anderen Kabels sowie ein Teil des Zufuhr- oder Steigkabels (760) in einem separaten Spleißabteil (490) der Überlängenverstauungsschale (400, 400C1, 400C2, 400DA, 400DB) verstaut werden.

14. Verfahren nach einem der Ansprüche 12 oder 13, **dadurch gekennzeichnet, dass** die Stützstruktur (200D1) in einem Kasten (6001) angeordnet ist und ein weiterer Kasten (6002) neben dem Kasten (6001) angeordnet ist, wobei der andere Kasten (6002) den mindestens einen weiteren Steckstreifen (310) aufweist; und eine weitere Stützstruktur (200D2) zum Aufweisen von mehreren Stützpositionen (220) zum Stützen von mehreren des mindestens einen weiteren Steckstreifens (310) in einer gestapelten Anordnung (500, 500A, 500C, 500D1, 500D2) aufweist, wobei der Kasten (6001) eine Durchlassöffnung (620) aufweist und der andere Kasten (6002) eine weitere Durchlassöffnung (625) aufweist, und wobei die Durchlassöffnung (620) und die andere Durchlassöffnung (625) zum Vorsehen eines Durchführkanals (630) in Verbindung stehen, der durch ein Dichtungsmittel (640) zu einer Umgebung abgedichtet ist, wobei das Verfahren den Schritt des Zuführens des Endes (710) oder des anderen Endes (720) des Überbrückungskabels (700D1) durch den Durchführkanal (630) aufweist.

## Revendications

1. Dispositif de couplage de câble (100) pour connecter des câbles de démarrage dans un système de distribution, comprenant:
au moins une bande de connexion (310) comprenant une pluralité de connecteurs (315) agencés le long d'une face de ladite bande de connexion (310); et
une structure de support (200, 200A, 200C, 200D1, 200D2) pour offrir une pluralité de positions de support (220) pour supporter plusieurs de ladite au moins une bande de connexion (310) dans un agencement superposé (500, 500A, 500C, 500D1, 500D2),
**caractérisé par**:
au moins une caisse de stockage surlongueur (400, 400C1, 400C2, 400DA, 400DB) pour stocker des surlongueurs des câbles de démarrage, ladite caisse de stockage surlongueur (400, 400C1, 400C2, 400DA, 400DB) comprenant une base de caisse (460) et au moins un guide de câble (480) faisant saillie à partir de ladite base de caisse (460),
dans lequel ladite caisse de stockage surlongueur comprend des moyens de connexion (450) pour attacher la caisse de stockage surlongueur à l'une des positions de support (220),
la caisse de stockage surlongueur (400) comporte deux ouvertures (483, 484) dans une face d'entrée/sortie (420), les connecteurs (315) de la bande de connexion (310) ou des caisses de connexion étant basiquement orientés dans la même direction générale que les ouvertures d'entrée et de sortie (483, 484) de la caisse de stockage surlongueur (400);
dans lequel ladite au moins une bande de connexion (310) et ladite au moins une caisse de stockage surlongueur (400, 400C1, 400C2, 400DA, 400DB) sont positionnés de façon mobile à des positions de support différentes (220) au niveau de la structure de support (200, 200A, 200C, 200D1, 200D2) dans un agencement superposé (500, 500A, 500C, 500D1, 500D2).

2. Dispositif de couplage de câble (100) selon la revendication 1, **caractérisé en ce que** la face (325) de la bande de connexion (310) est une face (320) d'une caisse de connexion (300, 300A, 300B, 300C1, 300C2, 300D1A, 300D2B).

3. Dispositif de couplage de câble (100) selon la revendication 1 ou 2, **caractérisé en ce que** la caisse de stockage surlongueur (400, 400C1, 400C2, 400DA, 400DB) comprend une pluralité de guides (480) espacés le long d'une ligne (410) sur la base (460) de ladite caisse de stockage surlongueur (400, 400C1, 400C2, 400DA, 400DB).

4. Dispositif de couplage de câble (100) selon l'une quelconque des revendications 1 à 3, **caractérisé en ce que** la caisse de stockage surlongueur (400, 400C1, 400C2, 400DA, 400DB) comprend un compartiment d'épissage séparé (490) en plus d'un compartiment de stockage surlongueur (470).

5. Dispositif de couplage de câble (100) selon l'une quelconque des revendications 1 à 4, **caractérisé en ce que** le compartiment d'épissage (490) est séparé du compartiment de stockage (470) par une paroi (472).

6. Dispositif de couplage de câble (100) selon l'une quelconque des revendications 1 à 5, **caractérisé en ce que** ladite au moins une caisse de connexion (300, 300A, 300B, 300C1, 300C2, 300D1A, 300D2B) et ladite au moins une caisse de stockage surlongueur (400, 400C1, 400C2, 400DA, 400DB) sont articulées au niveau des positions de support (220) de la structure de support (200, 200A, 200C, 200D1, 200D2) détachable.

7. Dispositif de couplage de câble (100) selon l'une quelconque des revendications 1 à 6, **caractérisé en ce que** la caisse de stockage surlongueur (400, 400C1, 400C2, 400DA, 400DB) est supportée de façon pivotante au niveau de la structure de support (200).

8. Dispositif de couplage de câble (100) selon l'une quelconque des revendications 1 à 7, **caractérisé en ce que** ladite caisse de stockage surlongueur (400, 400C1, 400C2, 400DA, 400DB) présente une face d'entrée/sortie (420) orientée transversalement à la base (460), dans lequel la face d'entrée/sortie (420) se trouve dans un agencement superposé (500, 500A, 500C, 500D1, 500D2) avec ladite au moins une face de bande de connexion (325) lorsque la bande de connexion (310) et ladite au moins une caisse de stockage surlongueur (400, 400C1, 400C2, 400DA, 400DB) se trouvent dans la position superposée.

9. Dispositif de couplage de câble (100) selon l'une quelconque des revendications 1 à 8, **caractérisé en ce que** ladite structure de support (200D1, 200D2) est montée dans une boîte (6001, 6002).

10. Dispositif de couplage de câble (100) selon la revendication 9, **caractérisé en ce qu'**une autre boîte de distribution (6002) est agencée à la suite de la boîte (6001), l'autre boîte (6002) comprenant au moins une autre bande de connexion (310) comportant une pluralité de connecteurs (315) agencés le long d'une face de ladite une autre bande de connexion (310); et comprenant une structure de support (200D2) pour offrir une pluralité de positions de support (220) pour supporter plusieurs de ladite au moins une autre bande de connexion (310) dans un agencement superposé (500, 500A, 500C, 500D1, 500D2), dans lequel la boîte (6001) comprend un port (620), et l'autre boîte (6002) comprend un autre port (625), chacun des ports (620, 625) étant conçu pour amener un câble de démarrage hors de la boîte (6001) et dans l'autre boîte (6002), ou vice versa.

11. Dispositif de couplage de câble (100) selon la revendication 10, **caractérisé en ce que** la boîte (6001) et l'autre boîte (6002) sont agencées l'une à la suite de l'autre de telle sorte que le port (620) et l'autre port (625) soient en connexion pour former un canal d'interconnexion (630) isolé d'un environnement à l'aide d'un moyen de scellage (640).

12. Procédé pour connecter un câble de démarrage (700, 700C1, 700C2, 700D, 700D1) et pour stocker une surlongueur (740) du câble de démarrage (700, 700C1, 700C2, 700D, 700D1) à l'aide d'un dispositif de couplage de câble selon l'une quelconque des revendications 1 à 11, comprenant les étapes suivantes:
connecter une première extrémité (710) du câble de démarrage (700, 700C1, 700C2, 700D, 700D1) à un parmi une pluralité de connecteurs (315D1) agencés au niveau d'une face (325) d'au moins une bande de connexion (310),
connecter l'autre extrémité (720) à un autre connecteur (315D2) de ladite au moins une bande de connexion (310) ou à un parmi une pluralité de connecteurs (315) agencé au niveau d'une face (325) d'au moins une autre bande de connexion (310), et
entrer la surlongueur (740) entre les extrémités (710, 720) du câble de démarrage (700, 700C1, 700C2, 700D, 700D1) dans une caisse de stockage surlongueur (400, 400DA) supportée par une structure de support (200) de concert avec ladite au moins une bande de connexion (310) et/ou l'autre bande de connexion (310) dans un agencement superposé (500, 500A, 500C, 500D1, 500D2), ladite caisse de stockage surlongueur (400, 400DA) comprenant une base de caisse (460) et au moins un câble de guidage (480) faisant saillie à partir de ladite base de caisse (460), et
placer une partie de boucle de la surlongueur (740) du câble de démarrage (700, 700C1, 700C2, 700D, 700D1) autour dudit au moins un câble de guidage (480) de manière à former une seule boucle ouverte (790) dans la caisse de stockage surlongueur (400, 400DA) qui reprend approximativement la totalité de la surlongueur.

13. Procédé selon la revendication 12, **caractérisé en ce qu'**un autre câble de démarrage (750) est connecté par une première extrémité à l'un des connecteurs (315) et par l'autre extrémité (751) est épissé sur une extrémité de câble d'alimentation ou vertical, dans lequel la connexion épissée et une partie de l'autre câble ainsi qu'une partie du câble d'alimentation ou vertical (760) sont stockées dans un compartiment d'épissage séparé (490) de la caisse de stockage surlongueur (400, 400C1, 400C2, 400DA, 400DB).

14. Procédé selon la revendication 12 ou 13, **caractérisé en ce que** la structure de support (200D1) est agencée dans une boîte (6001), et une autre boîte (6002) est agencée à la suite de la boîte (6001), l'autre boîte (6002) comprenant ladite au moins une autre bande de connexion (310), et comprenant une autre structure de support (200D2) pour offrir une pluralité de positions de support (220) pour supporter plusieurs de ladite au moins une autre bande de connexion (310) dans un agencement superposé (500, 500A, 500C, 500D1, 500D2), dans lequel la boîte (6001) comprend un port (620), et l'autre boîte (6002) comprend un autre port (625), et dans lequel le port (620) et l'autre port (625) sont en connexion pour former un canal d'interconnexion (630) isolé d'un environnement à l'aide d'un moyen de scellage (640), dans lequel le procédé comprend l'étape de conduite de l'extrémité (710) ou de l'autre extrémité (720) du câble de démarrage (700D1) à travers le canal d'interconnexion (630).
